# EUROPEAN PATENT APPLICATION

(11) **EP 2 651 106 A1**
(43) Date of publication of application: **16.10.2013**
(21) Application number: 11846982.4
(22) Date of filing: 30.11.2011
(51) Int. Cl.: H04M 1/725, G06F 9/44

(54) **METHOD AND DEVICE FOR AUTOMATIC CLASSIFICATION OF APPLICATIONS IN MOBILE TERMINAL**

(30) Priority: 06.12.2010 CN 201010574896
(71) Applicant: Huawei Device Co., Ltd., Shenzhen, Guangdong 518129 (CN)
(72) Inventor: ZHANG, Mingxiu, Shenzhen Guangdong 518129 (CN)
(74) Representative: Haley, Stephen
(86) International application number: PCT/CN2011/083192
(87) International publication number: WO 2012/075898

(57) **Abstract**

Embodiments of the present invention provide a method and apparatus for automatically classifying an application in a mobile terminal. The method includes: obtaining classification attribute information in a configuration file of a mobile terminal application; and adding the mobile terminal application into an application set of a class corresponding to the classification attribute information of the mobile terminal application. Through the embodiments of the present invention, automatic classification of mobile terminal applications can be implemented, and an installation process of the application is simplified.

## Description

This application claims priority to Chinese Patent Application No. CN201010574896.6, filed with Chinese Patent Office on December 6, 2010 and entitled "METHOD AND APPARATUS FOR AUTOMATICALLY CLASSIFYING APPLICATION IN MOBILE TERMINAL", which is incorporated herein by reference in its entirety.

### FIELD OF THE INVENTION

The present invention belongs to the field of smart phones, and in particular, to a method and apparatus for automatically classifying an application in a mobile terminal.

### BACKGROUND OF THE INVENTION

As an electronic product daily used by people, a mobile phone becomes smarter and smarter, and with the spread of smart phones, more and more mobile phone applications preferred by a user is installed in a mobile phone of every user. All usual smart phones are provided with a mobile phone application classification function, and factory-customized applications in the smart phones are already classified in the smart phones, but other applications obtained by the user during a use process (for example, the applications preferred and downloaded from the Internet by the user) can only undergo manually designated classification by the user in an installation process, which leads to cumbersome installation of application software in the smart phones. Moreover, due to added manual intervention, if the user performs a faulty operation in a designated classification process or has a wrong understanding of a classification to which the application belongs, the software may be installed in an inappropriate classification, which effects accuracy of searching for the software subsequently through the classification.

### SUMMARY OF THE INVENTION

In view of this, an objective of the present invention is to provide a method and apparatus for automatically classifying an application in a mobile terminal, so that after being installed, an application in a mobile phone can be automatically classified into an appropriate class, so as to avoid troubles in an installation process caused by manual intervention.

To achieve the foregoing objective, the present invention provide a method for automatically classifying a mobile phone application in a mobile terminal, including:
obtaining classification attribute information in a configuration file of a mobile terminal application; and
adding the mobile terminal application into an application set of a class corresponding to the classification attribute information of the mobile terminal application.

On the other hand, an embodiment of the present invention further provides an apparatus for automatically classifying an application in a mobile terminal, which includes:
an obtaining unit, configured to obtain classification attribute information in a configuration file of a mobile terminal application; and
a classification unit, configured to add the mobile terminal application into an application set of a class corresponding to the classification attribute information of the mobile terminal application.

Through the automatic classification method and automatic classification apparatus of the mobile terminal application which are provided by the embodiments of the present invention, the application is automatically classified according to the classification attribute information in the configuration file of the mobile terminal application. Because of sparing a manual classification process in an application process, the installation process is facilitated, and a problem of inaccurate classification caused by classification performed by installation personnel is further effectively avoided.

### BRIEF DESCRIPTION OF THE DRAWINGS

To illustrate technical solutions in embodiments of the present invention or in the prior art more clearly, accompanying drawings to be used in the description of the embodiments or the prior art are introduced briefly in the following. Apparently, the accompanying drawings in the following description are only some embodiments of the present invention, and persons of ordinary skill in the art can derive other drawings from these accompanying drawings without creative efforts.

FIG. 1 is a schematic diagram of an embodiment of a method for automatically classifying an application in a mobile terminal according to the present invention;

FIG. 2 is a schematic diagram of another embodiment of a method for automatically classifying a mobile phone application in a mobile terminal according to the present invention;

FIG. 3 is a schematic diagram of an embodiment of an apparatus for automatically classifying an application in a mobile terminal according to the present invention; and

FIG. 4 is a schematic diagram of another embodiment of an apparatus for automatically classifying an application in a mobile terminal according to the present invention.

### DETAILED DESCRIPTION OF THE EMBODIMENTS

In order to make objectives, technical solutions, and advantages of embodiments of the present invention clearer, the technical solutions in the embodiments of the present invention are described clearly and completely in the following with reference to accompanying drawings in the embodiments of the present invention. Apparently, the described embodiments are only part rather than all of the embodiments of the present invention. All other embodiments obtained by persons of ordinary skill in the art based on the embodiments of the present invention without creative efforts shall fall within the protection scope of the present invention.

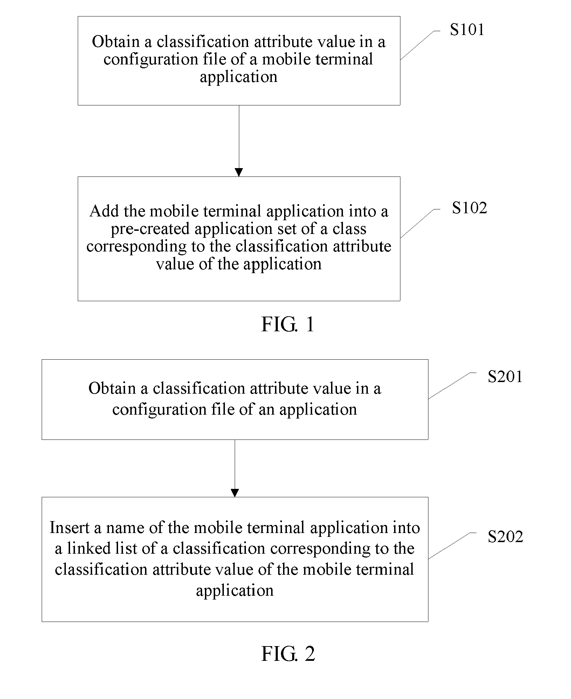

FIG. 1 is a schematic diagram of a method for automatically classifying an application in a mobile terminal provided by the present invention. As is shown in FIG. 1, the method includes:

Step S101: Obtain classification attribute information in a configuration file of a mobile terminal application.

It should be noted that, the mobile terminal in each embodiment of the present invention is not limited to a mobile phone and may also include other mobile terminals capable of supporting installation of an application, such as an IPad.

In the embodiment of the present invention, the classification attribute information of the mobile terminal application is preset in the configuration file, and the classification attribute information indicates a class to which the application belongs.

The classification attribute information in the present invention may include a classification attribute value.

In practice, an execution scenario of step S101 may be an installation process of the mobile terminal application, and may also be time when classification is performed on an already installed mobile terminal application.

Step S102: Add the mobile terminal application into a pre-created application set of a class corresponding to the classification attribute information of the application.

In this way, through the configuration file of the application, the application can automatically allocated to the corresponding class, so that manual classification in the installation process is avoided and the installation process of the mobile terminal application is facilitated, and further, a problem of inaccurate classification caused by a manual operation performed by installation personnel may be effectively avoided.

In practice, in Step S102, there may be many forms of the application set of each class, as long as a connection between a class and all applications in the class can be created. For example, a table may be created for each class and fill the table of each class with names of all applications belonging to the class.

A specific implementation of the present invention is illustrated in detail with one specific example below.

FIG. 2 shows a specific embodiment of a method for automatically classifying a mobile terminal application provided by the present invention. In this embodiment, mobile terminal applications are classified into at least five classes, including a "tool class", a "game class", a "media class", a "setting class" and a "communication class", and a class cannot be classified clearly may be defined as an "other class".

In the mobile terminal, a linked list is created for every class in advance. Each node in the linked list of each class includes a name of the class, a name of an application corresponding to the node, and a pointer pointing at a next node.

When in one class, no mobile terminal application is installed, a linked list of the class has only one node, the node is a linked list head, and in this case, an application name in the linked list head node may be set to null. When a new application is added into the class, for example, an unclassified application already in the mobile terminal is added into the class, or a newly installed application is added into the class, the following application classification process is required to be performed.

Step S201: Obtain classification attribute information in a configuration file of the application.

When the mobile terminal is a mobile phone, for an Android mobile phone operating system platform, one field (may be named as app_class) may be added in the configuration file AndroidManifest.xml of the mobile phone application, and a value of the field (that is, the classification attribute information) indicates a class configured for the application in advance. During development of each mobile phone application, a developer objectively allocates one class for the mobile phone application according to a feature of the application, and correspondingly sets the classification attribute information in the configuration file of the application according to the allocated class.

For example, for an application, such as a bell, a schedule, a calculator, a recorder, a stopwatch, a notepad, unit conversion, exchange rate conversion or time zone, classification attribute information in a configuration file of the application may be set to "tool class"; for an application, such as music, a camera, a video camera and a radio, classification attribute information in a configuration file of the application may be set to "media class"; for an application, such as a game, classification attribute information in a configuration file of the application may be set to "communication class"; and for an application, such as display settings, profile settings, data connection, call settings, security settings or network settings, classification attribute information in a configuration file of the application may be set to "setting class".

Step S202: Insert a name of the mobile terminal application into a linked list of a classification corresponding to the classification attribute information of the mobile terminal application. Specifically, in the linked list of the class corresponding to the classification attribute information of the application, a new node may be created for the application, and the name of the application is filled in the newly created node.

In this way, each time when an application is newly added into one class, a linked list of the class is expanded. Application names in nodes in the linked list are names of all applications in the class corresponding to the linked list, and accordingly, a set of the applications belonging to the same classification is built.

In addition, during a use process, when the mobile terminal performs displaying after being powered on, a display module invokes each linked list, and displays, in a region of a class of the linked list, shortcuts of applications corresponding to all nodes in each linked list, to achieve in turn an objective of classification displaying.

In addition, an embodiment of the present invention further correspondingly provides an apparatus for automatically classifying a mobile terminal application. The apparatus can implement automatic classification of the mobile terminal application.

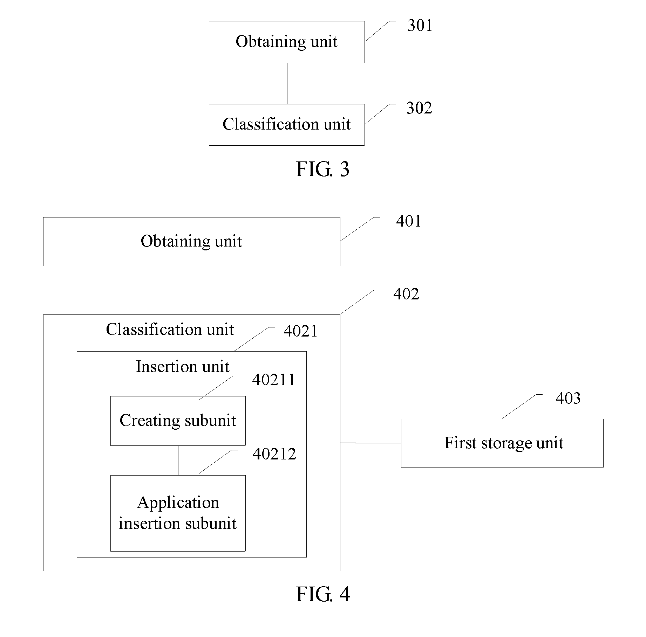

Specifically, as shown in FIG. 3, the apparatus includes an obtaining unit 301 and a classification unit 302.

The obtaining unit 301 is configured to obtain classification attribute information in a configuration file of a mobile terminal application.

The classification unit 302 is configured to add the mobile terminal application into an application set of a class corresponding to the classification attribute information of the mobile terminal application.

In addition, preferably, the automatic classification apparatus in the embodiment may further include a configuration unit. The configuration unit is configured to preset the classification attribute information in the configuration file of the mobile terminal application, where the classification attribute information indicates the class allocated for the mobile terminal application.

In practice, there may be many forms of an application set of each class, as long as a connection between a class and all applications in the class can be created.

A specific implementation of a method for automatically classifying a mobile terminal application provided by the present invention is described in detail with reference to one specific

### example below.

In this embodiment, a linked list is created for each class in advance. Each node in the linked list of each class includes a name of the class, a name of an application corresponding to the node, and a pointer pointing at a next node.

As shown in FIG. 4, an apparatus for automatically classifying a mobile terminal application in this embodiment includes an obtaining unit 401, a classification unit 402 and a first storage unit 403.

The obtaining unit 401 is configured to obtain classification attribute information in a configuration file of a mobile terminal application. The classification unit 402 is configured to add the mobile terminal application into an application set of a class corresponding to the classification attribute information of the mobile terminal application.

The first storage unit 403 is configured to store a linked list created for each class.

In this embodiment, the classification unit 402 specifically includes an insertion unit 4021. The insertion unit 4021 is configured to insert a name of the mobile terminal application into a linked list of the class corresponding to the classification attribute information of the application.

Specifically, the insertion unit 4021 may include a creating subunit 40211 and an application insertion subunit 40212. The creating subunit 40211 is configured to add a new node for the application and in the linked list corresponding to the classification attribute information of the application. The application insertion subunit 40212 is configured to fill the name of the application in the node added by the creating subunit.

In this way, each time when an application is newly added into one class, a linked list of the class is expanded. Application names in nodes in the linked list are names of all the applications in the class corresponding to the linked list; and accordingly, a set of the applications belonging to the same classification is built.

In this embodiment, the apparatus for automatically classifying the mobile terminal application may be a functional module in a CPU of the mobile terminal, where the obtaining unit 401 and the classification unit 402 may be a segment of a program or codes, and the program or codes can be stored in a nonvolatile memory of the mobile terminal. In a process of implementing the automatic classification of the mobile terminal application, the program or the codes are executed by the CPU of the mobile terminal.

The embodiments of the present invention may be implemented through software, and a corresponding software program may be stored in a readable storage medium, for example, a hard disk or a cache of a router, or an optical disk.

What are described above are merely exemplary embodiments of the present invention, and it should be noted that persons of ordinary skill in the art can make several improvements and refinements without departing from the principle of the present invention, and these modifications and refinements should be deemed within the protection scope of the present invention.

## Claims

1. A method for automatically classifying an application in a mobile terminal, comprising:
obtaining classification attribute information in a configuration file of a mobile terminal application; and
adding the mobile terminal application into an application set of a class corresponding to the classification attribute information of the mobile terminal application.

2. The method according to claim 1, further comprising:
presetting the classification attribute information in the configuration file of the mobile terminal application, wherein the classification attribute information indicates a class allocated for the mobile terminal application.

3. The method according to claim 1 or 2, wherein the application set of the class comprises a linked list created for the class; and
the adding the mobile terminal application into the application set of the class corresponding to the classification attribute information of the mobile terminal application comprises:
inserting a name of the mobile terminal application into the linked list of the class corresponding to the classification attribute information of the application.

4. The method according to claim 3, wherein each node in a linked list of each class comprises a name of the class, a name of an application corresponding to the node, and a pointer pointing at a next node.

5. The method according to claim 4, wherein the inserting the name of the mobile terminal application into the linked list of the class corresponding to the classification attribute information of the application comprises:
adding a new node for the application and in the linked list of the class, and filling the name of the application in the newly added node.

6. The method according to any one of claims 1 to 5, wherein the classification attribute information comprises a classification attribute value.

7. An apparatus for automatically classifying an application in a mobile terminal, comprising:
an obtaining unit, configured to obtain classification attribute information in a configuration file of a mobile terminal application; and
a classification unit, configured to add the mobile terminal application into an application set of a class corresponding to the classification attribute information of the mobile terminal application.

8. The apparatus for automatically classifying an application in a mobile terminal according to claim 7, further comprising:
a configuration unit, configured to preset the classification attribute information in the configuration file of the mobile terminal application, wherein the classification attribute information indicates a class allocated for the mobile terminal application.

9. The apparatus for automatically classifying an application in a mobile terminal according to claim 7 or 8, wherein the application set of the class comprises a linked list created for the class; the apparatus further comprises a first storage unit, configured to store the linked list created for the class; and
the classification unit comprises:
an insertion unit, configured to insert a name of the mobile terminal application into the linked list of the class corresponding to the classification attribute information of the application.

10. The apparatus for automatically classifying an application in a mobile terminal according to claim 9, wherein each node in a linked list of each class comprises a name of the class and a name of an application corresponding to the node, and further comprises a pointer pointing at a next node.

11. The apparatus for automatically classifying an application in a mobile terminal according to claim 9, wherein the insertion unit comprises:
a creating subunit, configured to add a new node for the application and in the linked list corresponding to the classification attribute information of the application; and
an application insertion subunit, configured to fill the name of the application in the node newly added by the creating subunit.
